# EUROPÄISCHE PATENTSCHRIFT

(11) **EP 2 692 218 B1**
(45) Veröffentlichungstag und Bekanntmachung des Hinweises auf die Patenterteilung: **06.02.2019**
(21) Anmeldenummer: 13167761.9
(22) Anmeldetag: 15.05.2013
(51) Int. Cl.: A01B 73/00, A01B 59/06

(54) **SELBSTFAHRENDER FELDHÄCKSLER**
SELF-PROPELLED CHAFF CUTTER
RAMASSEUSE-HACHEUSE AUTOMOTRICE

(30) Priorität: 02.08.2012 DE 102012107067
(43) Veröffentlichungstag der Anmeldung: 05.02.2014
(73) Patentinhaber: CLAAS Selbstfahrende Erntemaschinen GmbH, 33428 Harsewinkel (DE)
(72) Erfinder: Look, Stefan, 47533 Kleve (DE); Lahmann, Dirk, 33790 Halle/Westf. (DE)
(74) Vertreter: CLAAS Gruppe

(56) Entgegenhaltungen:
- EP-A1- 0 025 848
- EP-A1- 1 894 463
- DE-A1- 2 845 823
- DE-A1-102005 002 221
- FR-A1- 2 538 211
- US-A- 3 810 513

## Beschreibung

Die Erfindung betrifft einen selbstfahrenden Feldhäcksler, umfassend einen Fahrzeugrahmen, an welchem an einer in Arbeitsrichtung orientierten Frontseite ein Erntevorsatz anbringbar und der an einer von der Frontseite abgewandten Heckseite mit einer Aufnahmevorrichtung versehen ist, wobei der Feldhäcksler eine Brennkraftmaschine aufweist, die über einen ersten Riementrieb eine Häckseltrommel und ein Gebläse antreibt. Daneben betrifft die Erfindung eine Kombination aus einem solchen Feldhäcksler und einem Arbeitsgerät.

Selbstfahrende Erntemaschinen, wie Mähdrescher, Feldhäcksler und dergleichen, die mit einem von dieser abkuppelbaren Erntevorsatz mit relativ großer Arbeitsbreite betrieben werden, weisen häufig heckseitig eine Aufnahmevorrichtung in Form einer Anhängekupplung auf, mit der eine Zugdeichsel eines Transportanhängers verbindbar ist. Der von der Erntemaschine abgekuppelte Erntevorsatz wird dann bei Straßenfahrt der Erntemaschine sowie beim Befahren enger Zufahrten zum Feld auf dem Transportanhänger quer zu seiner Arbeitsrichtung mitgeführt.

Aus der DE 10 2005 002 221 A1 geht eine selbstfahrende Erntemaschine in Form eines Feldhäckslers hervor, bei welcher ein Fahrzeugrahmen an einer Frontseite des Feldhäckslers einen Erntevorsatz in Form einer Pick-up aufnimmt. An einer Heckseite weist der Feldhäcksler zudem eine Aufnahmevorrichtung auf. Der frontseitige Erntevorsatz steht dabei mit einer Erntegutfördereinrichtung in Verbindung, die das von der Pick-up aufgenommene Erntegut in eine nachgeschaltete Häckseltrommel fördert. Das Erntegut wird von der Häckseltrommel in kleine Stücke gehäckselt und anschließend über einen Auswurfkrümmer in einen Sammelwagen gefördert. Zur Vermeidung einer Überbreite des Feldhäckslers bei Straßenfahrt kann der Erntevorsatz auf einer Transportvorrichtung längs zur Fahrtrichtung hinter dem Feldhäcksler hergeführt werden, wobei diese Transportvorrichtung dabei als mit einem Rahmengestell versehene Achse ausgestaltet ist, auf welche der Erntevorsatz aufgelegt und an der Heckseite des Feldhäckslers angekoppelt wird. Während des Arbeitseinsatzes des Feldhäckslers wird die Transporteinrichtung hingegen an der heckseitigen Aufnahmevorrichtung eingehängt, welche hierbei über zwei heb- und senkbare Tragarme verfügt, in deren U-förmige Haken die Transporteinrichtung eingehängt wird.

Ausgehend vom vorstehend beschriebenen Stand der Technik ist es nun die Aufgabe der vorliegenden Erfindung, einen selbstfahrenden Feldhäcksler derart weiterzubilden, dass dieser verschiedene austauschbare Arbeitsgeräte aufnehmen kann.

Diese Aufgabe wird ausgehend vom Oberbegriff des Anspruchs 1 in Verbindung mit dessen kennzeichnenden Merkmalen gelöst. Die hierauf folgenden, abhängigen Ansprüche geben vorteilhafte Weiterbildungen der Erfindung wieder.

Gemäß der Erfindung umfasst ein selbstfahrender Feldhäcksler einen Fahrzeugrahmen, an welchem an einer in Arbeitsrichtung orientierten Frontseite ein Erntevorsatz aufgenommen werden kann und der an einer von der Frontseite abgewandten Heckseite mit einer Aufnahmevorrichtung versehen ist. Bei dem selbstfahrenden Feldhäcksler handelt es sich bei dem frontseitig platzierbaren Erntevorsatz insbesondere um ein Schneidwerk, einen Maisvorsatz oder eine Pick-up mit dahinter liegendem Häckselwerk, wobei über eine Erntegutfördereinrichtung das mittels des Erntevorsatzes aufgenommene Erntegut dem nachgeschalteten Häckselwerk zugeführt werden kann. Das Erntegut wird dann in dem Häckselwerk in kleine Teile zerhäckselt und im Anschluss daran bevorzugt über ein Gebläse einem Auswurfkrümmer zur Ausgabe zugeführt, über welchen das zerkleinerte Gut beispielsweise auf einen nebenher fahrenden Sammelwagen gefördert werden kann. Der im Arbeitseinsatz vorgeschaltete Erntevorsatz kann zudem insbesondere für die Straßenfahrt abgenommen oder zumindest in seinen Querabmessungen reduziert werden. Der Feldhäcksler weist eine Brennkraftmaschine auf, die über einen ersten Riementrieb eine Häckseltrommel und das Gebläse antreibt.

Die Erfindung umfasst nun die technische Lehre, dass die heckseitige Aufnahmevorrichtung des selbstfahrenden Feldhäckslers zur Aufnahme austauschbarer Arbeitsgeräte als Dreipunkt-Kraftheber ausgestaltet ist, welcher über Anlenkpunkte für einen daran angebrachten Oberlenker und zwei jeweils heb- und senkbare Unterlenker verfügt, an welchen das Arbeitsgerät einhängbar ist. Mit anderen Worten ist die heckseitige Aufnahmevorrichtung also einem insbesondere bei Traktoren oder landwirtschaftlichen Systemfahrzeugen vorzufindenden Front- oder Heckkraftheber nachempfunden, an dessen Oberlenker und Unterlenkern die meisten gängigen Anbaugeräte eingehängt und mit diesen auf eine gewünschte Höhe angehoben werden können.

Eine derartige Ausgestaltung einer heckseitigen Aufnahmevorrichtung eines selbstfahrenden Feldhäckslers hat hierbei den Vorteil, dass somit der Feldhäcksler schon direkt ein Arbeitsgerät mitführen kann, welches dann beispielsweise eine weitere Verarbeitung des gehäckselten Erntegutes vornimmt. So kann beispielsweise eine Ballenpresse an den Feldhäcksler angehängt werden, über welche das gehäckselte Erntegut beispielsweise zu Quader- oder Rundballen zusammengepresst wird. Diese Ballenpresse kann dann mit einem entsprechenden Trichter versehen werden, in welchen der Auswurfkrümmer des Feldhäckslers direkt fördert, so dass ein separates nebenherlaufendes Zugfahrzeug entfallen kann. Andererseits können aber auch anderweitige angetriebene oder nicht angetriebene Arbeitsgeräte zu verschiedenen Zwecken aufgesattelt oder nachgezogen werden.

Hierzu zählt beispielsweise ein Behälter mit Siliermittel und/oder Wasser, um so die Kapazität von mit dem Feldhäcksler mitführbarem Siliermittel bzw. Wasser deutlich zu erhöhen, wodurch sich die Reichweite des Feldhäckslers erhöhen kann. Der Behälter verfügt in diesem Fall zweckmäßigerweise über eine Halteeinrichtung, die ein Einhängen des Behälters in die Aufnahmevorrichtung des Feldhäckslers ermöglicht. Ein derartiger Behälter kann vorteilhaft über Versorgungsleitungen mit des Feldhäckslers verbindbar ausgeführt sein, so dass Siliermittel bzw. Wasser aus dem Behälter über eine entsprechende Zuführeinrichtung dem Ernteprozess oder Arbeitsaggregaten dem Feldhäcksler zugeführt werden kann.

Für unterschiedliche Zwecke kann es sich bei dem Arbeitsgerät vorteilhaft auch um eine Transporteinrichtung, vorzugsweise im Sinne einer Hubplattform handeln, wodurch ein Mitführen von Funktionsgegenständen, beispielsweise durch einfaches Abstellen des betreffenden Funktionsgegenstandes (z.B. eines Behälters) auf der Plattform, ermöglicht wird.

Das Einhängen eines Arbeitsgeräts in die heckseitige Aufnahmevorrichtung hat - ganz unabhängig von einer zusätzlichen Funktionalität durch das jeweilige Arbeitsgerät - den Effekt einer zusätzlichen Ballastierung des Hecks des Feldhäckslers, was insbesondere im Fall von Feldhäckslern, die bauartbedingt zumeist frontlastig gebaut sind, zu einer vorteilhaften Verlagerung des Schwerpunkts zum Heck führt. Um allein diesen Effekt zu nutzen, kann es sich bei dem angebauten Arbeitsgerät auch um ein bloßes Gewicht zur Ballastierung des Feldhäckslers im Heckbereich handeln.

Weiterhin könnte vorteilhaft ein Mulchgerät zum Mulchen von Maisstoppeln bei der Maisernte als Arbeitsgerät angebaut werden.

Die erfindungsgemäß vorgesehene Aufnahmevorrichtung in Ausgestaltung eines Dreipunkt-Krafthebers ermöglicht in allen der Fälle ein komfortables, schnelles und sicheres Anheben/Absenken sowie An-/Abbauen des jeweiligen Arbeitsgeräts. Eine flexible Nutzung unterschiedlicher Arbeitsgeräte ist durch die hohe Kompatibilität des Dreipunkt-Krafthebers vorteilhaft möglich. Der Wechsel verschiedener Arbeitsgeräte ist schnell und auf komfortable Weise durchführbar.

Im Gegensatz hierzu ist die bei der DE 10 2005 002 221 A1 heckseitig an dem Feldhäcksler vorgesehene Aufnahmevorrichtung nicht zur Angliederung verschiedener Arbeitsgeräte geeignet, sondern dient lediglich der Aufnahme der Transporteinrichtung, welche bei Straßenfahrt zum Transport des abnehmbaren Erntevorsatzgeräts zur Anwendung kommt. Denn in die U-förmigen Aufnahmehaken der Tragarme der Aufnahmevorrichtung kann zwar das Transportgestell mit hieran ausgestalteten Bolzen eingehängt werden, zum Aufnehmen und insbesondere Anheben verschiedener Arbeitsgeräte sind diese Tragarme aber nicht vorgesehen.

Im Sinne der Erfindung sind die Unterlenker, wie bei einem Heckhubwerk eines Traktors üblich, an ihren dem jeweils aufzunehmenden Arbeitsgerät zugwandten Enden mit Fanghaken versehen, in die das jeweilige Arbeitsgerät, unter Umständen unter Verwendung von Reduzierkugeln, eingehängt werden kann.

Entsprechend der Erfindung ist der Aufnahmevorrichtung zudem ein Zapfwellenanschluss zugeordnet, über welchen ein einzuhängendes Arbeitsgerät antreibbar ist, wobei der Zapfwellenanschluss über einen zweiten Riementrieb mit der Brennkraftmaschine in Verbindung steht. Die Integration eines Zapfwellenanschlusses in Bereich der Aufnahmevorrichtung hat hierbei den Vorteil, dass somit ein eingehängtes Arbeitsgerät direkt über den selbstfahrenden Feldhäcksler angetrieben werden kann. So kann
der bei einem Arbeitsgerät, wie einer Quaderballenpresse oder einem Mulcher, erforderliche Antrieb durch eine Antriebsmaschine der selbstfahrenden Erntemaschine geschaffen werden. Bevorzugt ist eine zum Zapfwellenanschluss führende Welle dabei über einen Riementrieb mit der Antriebsmaschine der Erntemaschine verbunden, wobei bevorzugt ein Getriebe zwischengeschaltet ist, über welches die gängigen, unterschiedlichen Zapfwellendrehzahlen dargestellt werden können.

In Weiterbildung der Erfindung ist der Dreipunkt-Kraftheber als hydraulischer Dreipunkt-Kraftheber ausgeführt und verfügt über zumindest einen hydraulischen Hubzylinder, über welchen an den Anlenkpunkten angegliederte Unterlenker heb- und senkbar sind. Dementsprechend kann auf kompakte und präzise steuerbare Art und Weise ein entsprechendes Anheben sowie Absenken und somit Einstellen einer Arbeitshöhe eines angehängten Arbeitsgeräts vorgenommen werden. Der zudem vorgesehene Oberlenker des Dreipunktkrafthebers kann im Rahmen der Erfindung insbesondere als Gewindespindel ausgeführt oder aber auch als doppelt wirkender Hydraulikzylinder ausgestaltet sein. Dabei kann über den Oberlenker eine entsprechende Neigung des Anbaugeräts eingestellt werden.

Entsprechend einer Weiterbildung der vorgenannten Variante ist der zumindest eine hydraulische Hubzylinder dabei über ein fahrzeugseitiges Hydrauliksystem ansteuerbar. Der Dreipunkt-Kraftheber der Aufnahmevorrichtung kann dementsprechend auf einfach Art und Weise durch ein bereits bestehendes Hydrauliksystem versorgt und auch gesteuert werden.

Gemäß einer weiteren Ausgestaltung der Erfindung weist der Dreipunkt-Kraftheber elektrische und/oder hydraulische Anschlussstellen auf, an welchen Versorgungsleitungen eines einzuhängenden Arbeitsgeräts anschließbar sind. Dementsprechend können alternativ oder auch ergänzend zu einem mechanischen Antrieb über eine Zapfwelle arbeitsgerätseitige elektrische oder hydraulische Verbraucher, wie beispielsweise Sensoren oder Aktoren, betrieben werden.

In Weiterbildung der Erfindung ist der Dreipunkt-Kraftheber an einem Lagerbock einer lenkbaren Hinterachse der selbstfahrenden Erntemaschine befestigt. Die Anordnung des Dreipunkt-Krafthebers an einem derartigen Lagerbock hat hierbei den Vorteil, dass der Kraftheber dementsprechend an einem Teil des Fahrzeugrahmens angegliedert wird, welcher zur Abstützung von Lasten eines nachgeführten Arbeitsgeräts ausreichend robust ausgestaltet sein kann. Eine Befestigung des Dreipunkt-Krafthebers am Lagerbock kann hierbei beispielsweise durch Anflanschen von Anhängelaschen des Krafthebers, also des Oberlenkers sowie der Unterlenker, oder aber auch durch anderweitige Befestigungsmöglichkeiten, wie beispielsweise Schweißverbindungen, gestaltet sein.

Die Erfindung ist nicht auf die angegebene Kombination der Merkmale des Hauptanspruchs oder der abhängigen Ansprüche beschränkt. Es ergeben sich darüber hinaus Möglichkeiten, einzelne Merkmale, auch soweit sie aus den Ansprüchen, der nachfolgenden Beschreibung einer Ausführungsform oder unmittelbar aus den Zeichnungen hervorgehen, miteinander zu kombinieren. Die Bezugnahme der Ansprüche auf die Zeichnungen durch Verwendung von Bezugszeichen soll den Schutzumfang der Ansprüche nicht beschränken.

Weitere, vorteilhafte Ausgestaltungen der Erfindung ergeben sich aus der nachfolgenden Beschreibung einer bevorzugten Ausführungsform der Erfindung, die Bezug auf die in den Zeichnungen dargestellten Figuren nimmt. Es zeigt:
- Figur 1: eine schematische Seitenansicht einer selbstfahrenden Erntemaschine entsprechend einer bevorzugten Ausführungsform der Erfindung; und
- Figur 2: eine perspektivische Detailansicht eines Heckbereichs der Erntemaschine aus Figur 1.

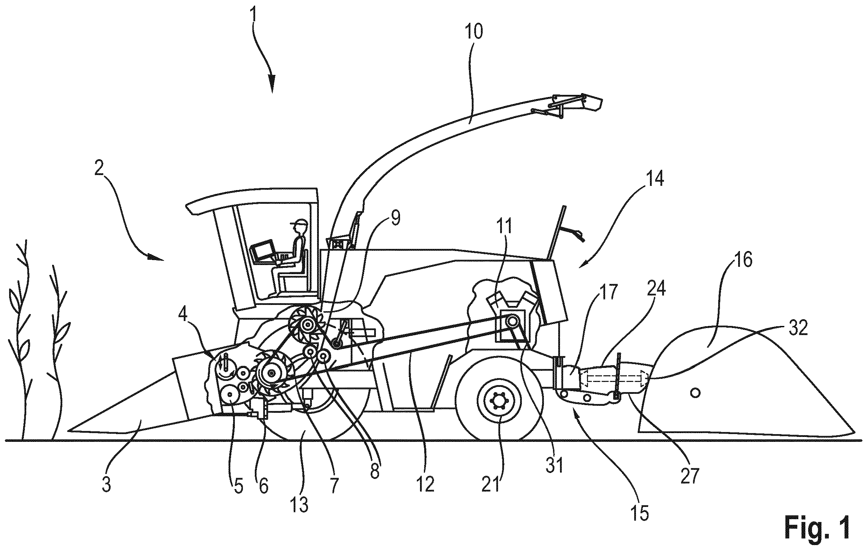

In Figur 1 ist eine selbstfahrende Erntemaschine in Form eines selbstfahrenden Feldhäckslers 1 dargestellt. Dieser selbstfahrende Feldhäcksler 1 nimmt dabei an einer Frontseite 2 einen austauschbaren Erntevorsatz 3 in Form eines Maisvorsatzes auf, der an den Feldhäcksler 1 ankoppelbar ist und den sich im angekoppelten Zustand in Richtung eines Erntegutflusses zunächst als Erntegutfördereinrichtung eine obere und eine untere Vorpresswalze 4 und 5 anschließen. Auf die beiden Vorpresswalzen 4 und 5 folgt dann eine Häckseltrommel 6, die das zugeführte Erntegut an einer nicht näher dargestellten Gegenschneide zerkleinert. Nach Zerkleinerung wird das Erntegut dann mittels eines Zuführschachtes 7 zunächst einer Nachzerkleinerungseinrichtung 8 und anschließend einem Gebläse 9 zugeführt, wobei über letzteres das zerhäckselte Gut zu einem verstellbaren Auswurfkrümmer 10 gefördert wird.

Wie zudem aus Figur 1 hervorgeht, weist der selbstfahrende Feldhäcksler 1 eine Brennkraftmaschine 11 auf, die über einen ersten Riementrieb 12 die Häckseltrommel 6 und das Gebläse 9 antreibt. Ferner steht die Brennkraftmaschine 11 auch - auf vorliegend nicht näher dargestellte Art und Weise - mit einem Fahrantrieb des Feldhäckslers 1 zum Antreiben einer Vorderachse 13, mit den Vorpresswalzen 4 und 5, der Nachzerkleinerungseinrichtung 8 und weiteren Komponenten in Verbindung. Hierzu sind zum Teil weitere Riemenantriebe vorgesehen.

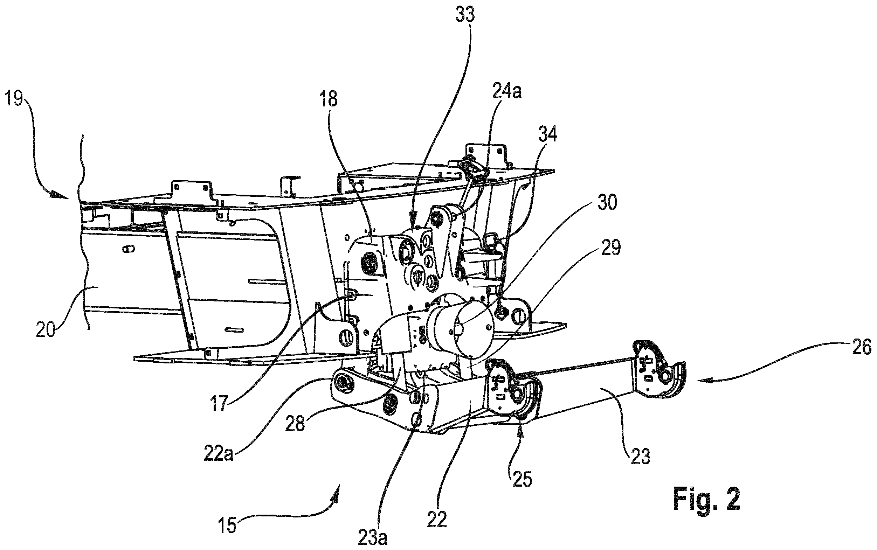

Ferner weist der selbstfahrende Feldhäcksler 1 an einer Heckseite 14 eine Aufnahmevorrichtung 15 auf, über welche vorliegend ein Arbeitsgerät 16 in Form eines Mulchmähwerks heckseitig an den Feldhäcksler 1 angehängt ist. Ein entsprechendes Mulchmähwerk dient zum Zerkleinern der Maisstoppeln, wodurch eine Vermehrung des Maiszünslers verhindert werden soll. Die extrem zerkleinerten Maisstoppeln werden in einem nachfolgenden Arbeitsgang mit Bodenbearbeitungsgeräten gleichmäßig und möglichst tief in den Boden eingearbeitet. Die Aufnahmevorrichtung 15 ist dabei als Dreipunkt-Kraftheber 17 ausgestaltet, wobei der genauere Aufbau nun unter Zuhilfenahme der weiteren, perspektivischen Figur 2 beschrieben werden soll.

Wie in der perspektivischen Ansicht in Figur 2 zu erkennen ist, ist der Dreipunkt-Kraftheber 17 mit einem Gehäuse 18 an einem Teil eines Fahrzeugrahmens 19 des Feldhäckslers 1 befestigt, wobei es sich bei diesem Teil um einen Lagerbock 20 einer in Figur 1 angedeuteten lenkbaren Hinterachse 21 handelt.

Der Dreipunkt-Kraftheber 17 ist dabei an dem Lagerbock 20 angeflanscht und verfügt über zwei jeweils heb- und senkbare Unterlenker 22 und 23, sowie einen - in Figur 1 nur schematisch angedeuteten - Oberlenker 24, der hierbei als in der Länge verstellbare Gewindespindel ausgeführt und an einem in Figur 2 dargestellten Anlenkpunkt 24a ist. Die beiden Unterlenker 22 und 23 sind seitens der Befestigung des Dreipunkt-Krafthebers 17 an dem Lagerbock 20 an Anlenkpunkten 22a und 23a schwenkbar angelenkt und bilden an einem hierzu entgegengesetzten Ende je eine Schnellkupplung 25 bzw. 26 aus, in welchen das jeweils anzugliedernde Arbeitsgerät 16 mit einem entsprechenden in Figur 1 angedeuteten Gestell 27 eingehängt werden kann. Über den Oberlenker 24 wird dabei ebenfalls eine Verbindung zu dem Gestell 27 des eingehängten Arbeitsgeräts 16 hergestellt. Ein Heben und Senken der Unterlenker 22 und 23 kann dann über hydraulische Hubzylinder 28 und 29 hervorgerufen werden, die an dem jeweiligen Unterlenker 22 bzw. 23 zwischen der schwenkbaren Anlenkung am Gehäuse 18 und dem jeweiligen Fanghaken 25 bzw. 26 angreifen und an einem hierzu abgewandten Ende ebenfalls schwenkbar in dem Gehäuse 18 des Dreipunktkrafthebers 17 gelagert sind. Die beiden Hubzylinder 28 und 29 können dabei über ein fahrzeugseitiges Hydrauliksystem angesteuert werden und verändern hierbei den jeweiligen Schwenkwinkel des jeweiligen Unterlenkers 22 bzw. 23 zum Gehäuse 18 und auch zum Lagerbock 20. Dementsprechend kann ein Heben und Senken der Unterlenker 22 und 23 hervorgerufen und damit auch die Höhe des Gestells 27 des angehängten Arbeitsgeräts 16 verändert werden. Durch Längenveränderung des Oberlenkers 24 kann zudem eine entsprechende Neigung des Gestells 27 des nachgeschalteten Arbeitsgeräts 16 eingestellt werden.

Wie ferner aus Figur 2 ersichtlich ist, verfügt die Aufnahmevorrichtung 15 zudem über einen Zapfwellenanschluss 30, über welchen das an der Aufnahmevorrichtung 15 angegliederte Arbeitsgerät 16 angetrieben werden kann. Seitens des selbstfahrenden Feldhäckslers 1 steht der Zapfwellenanschluss 30 dabei über einen zweiten Riementrieb 31 mit der Brennkraftmaschine 11 in Verbindung, wobei dieser Riementrieb 31 dabei zapfwellenseitig auf einer - vorliegend nicht weiter dargestellten - Riemenscheibe läuft und somit eine Drehzahl der Brennkraftmaschine 11 auf eine mit dem Zapfwellenanschluss 30 in Verbindung stehende, ebenfalls nicht dargestellte Welle überträgt. Vorzugsweise ist dabei zudem ein Getriebe zwischengeschaltet, um unterschiedliche Zapfwellendrehzahlen am Zapfwellenanschluss 30 darzustellen. Das in Figur 1 heckseitig als Arbeitsgerät 16 angehängte Mulchmähwerk wird im Arbeitseinsatz über den Zapfwellenanschluss 30 mittels einer Zapfwelle 32 betrieben. Eine Arbeitshöhe und Neigung des Mulchmähwerks kann dabei dann zudem entsprechend über den Dreipunkt-Kraftheber 17 eingestellt werden. Vorzugsweise wird der Dreipunktkraftheber 17 während des Betriebs des Mulchmähwerks in einer Schwimmstellung betrieben, in der dieses der Bodenoberfläche folgen kann, so dass die Maisstoppeln unmittelbar am Boden abgeschnitten und zerkleinert werden.

Schließlich ist noch aus Figur 2 zu erkennen, dass der Dreipunktkraftheber 17 zudem hydraulische Anschlussstellen 33 aufweist, über die unter Verwendung entsprechender Hydraulikleitungen auch ein Hydrauliksystem des eingehängten Arbeitsgeräts 16 von der Fahrzeugseite her mit entsprechender Hydraulikflüssigkeit versorgt werden kann. Ferner ist noch an dem Gehäuse 29 des Dreipunkt-Krafthebers eine Anhängekupplung 34 ausgestaltet, an welche Arbeitsgeräte auch ohne Verwendung der Unterlenker 21 und 22 und des Oberlenkers 23 an die Heckseite 14 des Feldhäckslers 1 angehängt werden können, wie beispielsweise ein vorzugsweise einachsiger Anhänger mit zusätzlichem Tankvolumen für eine Siliermittelanlage.

Mittels der erfindungsgemäßen Ausgestaltung einer selbstfahrenden Erntemaschine ist es möglich, über die Aufnahmevorrichtung 15 zusätzliche Arbeitsgeräte 16 direkt an die selbstfahrende Erntemaschine heb- und senkbar anzuhängen und mittels des Zapfwellenanschlusses 30 auch zu betreiben. Aufgrund der Ausgestaltung der Aufnahmevorrichtung 15 als Dreipunkt-Kraftheber 17 können hierbei eine Arbeitshöhe und eine Neigung des angegliederten Arbeitsgeräts 16 variiert werden.

**Bezugszeichenliste**

| | | | |
|---|---|---|---|
| 1 | Feldhäcksler | 20 | Lagerbock |
| 2 | Frontseite | 21 | Hinterachse |
| 3 | Erntevorsatz | 22 | Unterlenker |
| 4 | Obere Vorpresswalze | 22a | Anlenkpunkt |
| 5 | Untere Vorpresswalze | 23 | Unterlenker |
| 6 | Häckseltrommel | 23a | Anlenkpunkt |
| 7 | Zuführschacht | 24 | Oberlenker |
| 8 | Nachzerkleinerungseinrichtung | 24a | Anlenkpunkt |
| 9 | Gebläse | 25 | Befestigungshaken |
| 10 | Auswurfkrümmer | 26 | Befestigungshaken |
| 11 | Brennkraftmaschine | 27 | Gestell |
| 12 | Erster Riementrieb | 28 | Hubzylinder |
| 13 | Vorderachse | 29 | Hubzylinder |
| 14 | Heckseite | 30 | Zapfwellenanschluss |
| 15 | Aufnahmevorrichtung | 31 | Riementrieb |
| 16 | Arbeitsgerät | 32 | Zapfwelle |
| 17 | Dreipunkt-Kraftheber | 33 | Hydraulische Anschlussstellen |
| 18 | Gehäuse | 34 | Anhängekupplung |
| 19 | Fahrzeugrahmen | | |

## Patentansprüche

1. Selbstfahrender Feldhäcksler (1), umfassend einen Fahrzeugrahmen (19), an welchem an einer in Arbeitsrichtung orientierten Frontseite (2) ein Erntevorsatz anbringbar und der an einer von der Frontseite (2) abgewandten Heckseite (14) mit einer Aufnahmevorrichtung (15) versehen ist, wobei der Feldhäcksler eine Brennkraftmaschine (11) aufweist, die über einen ersten Riementrieb (12) eine Häckseltrommel (6) und ein Gebläse (9) antreibt, **dadurch gekennzeichnet, dass** die Aufnahmevorrichtung (15) zum Anbau unterschiedlicher Arbeitsgeräte und deren Höhenverstellung als Dreipunkt-Kraftheber (17) ausgestaltet ist, welcher über Anlenkpunkte (22a, 23a, 24a) für einen Oberlenker (24) und zwei jeweils heb- und senkbare Unterlenker (22, 23) verfügt und in den das Arbeitsgerät (16) einhängbar ist, wobei der Aufnahmevorrichtung (15) ein Zapfwellenanschluss (30) zugeordnet ist, über welchen das einzuhängende Arbeitsgerät (16) antreibbar ist, wobei der Zapfwellenanschluss (30) über einen zweiten Riementrieb (31) mit der Brennkraftmaschine (11) in Verbindung steht.

2. Selbstfahrender Feldhäcksler (1) nach Anspruch 1, **dadurch gekennzeichnet, dass** der Dreipunkt-Kraftheber (17) als hydraulischer Dreipunkt-Kraftheber ausgeführt ist und über zumindest einen hydraulischen Hubzylinder (28, 29) verfügt, über welchen an den Anlenkpunkten angegliederte Unterlenker (22, 23) heb- und senkbar sind.

3. Selbstfahrender Feldhäcksler (1) nach Anspruch 2, **dadurch gekennzeichnet, dass** der zumindest eine hydraulische Hubzylinder (28, 29) über ein fahrzeugseitiges Hydrauliksystem ansteuerbar ist.

4. Selbstfahrender Feldhäcksler (1) nach einem der Ansprüche 1 bis 3, **dadurch gekennzeichnet, dass** der Dreipunkt-Kraftheber (17) elektrische und/oder hydraulische Anschlussstellen (33) aufweist, an welche Versorgungsleitungen des einzuhängenden Arbeitsgeräts (16) anschließbar sind.

5. Selbstfahrender Feldhäcksler (1) nach einem der Ansprüche 1 bis 4, **dadurch gekennzeichnet, dass** der Dreipunkt-Kraftheber (17) an einem Lagerbock (20) einer lenkbaren Hinterachse (21) befestigt ist.

6. Kombination aus
einem selbstfahrenden Feldhäcksler (1) gemäß einem der vorigen Ansprüche und einem Arbeitsgerät, das in die Aufnahmevorrichtung (15) der Erntemaschine (1) einhängbar ist.

7. Kombination nach Anspruch 6, **dadurch gekennzeichnet, dass** es sich bei dem Arbeitsgerät um ein Erntegutbearbeitungsgerät, insbesondere eine Ballenpresse handelt.

8. Kombination nach Anspruch 6, **dadurch gekennzeichnet, dass** es sich bei dem Arbeitsgerät um einen Wasser- und/oder Siliermittelbehälter handelt.

9. Kombination nach Anspruch 6, **dadurch gekennzeichnet, dass** es sich bei dem Arbeitsgerät um eine Transporteinrichtung handelt.

10. Kombination nach Anspruch 6, **dadurch gekennzeichnet, dass** es sich bei dem Arbeitsgerät um ein Gewicht zum Zweck der Ballastierung der Erntemaschine (1) handelt.

11. Kombination nach Anspruch 6, **dadurch gekennzeichnet, dass** es sich bei dem Arbeitsgerät um ein Restpflanzenbearbeitungsberät, insbesondere einen Mulcher (16) handelt.

## Claims

1. Self-propelled forage harvester (1), comprising a vehicle frame (19), to which a harvesting header can be attached on a front side (2) oriented in the working direction and which is provided with a mounting device (15) on a rear side (14) facing away from the front side (2), wherein the forage harvester has an internal combustion engine (11) which, via a first drive belt (12), drives a chopping drum (6) and a fan (9), **characterized in that** the mounting device (15) is designed as a three-point linkage (17) for the attachment of different implements and the height adjustment thereof, which has link points (22a, 23a, 24a) for a top link (24) and two lower links (22, 23) that can in each case be raised and lowered and into which the implement (16) can be hooked, wherein a power take-off connection (30), via which the implement (16) to be hooked in can be driven, is allocated to the mounting device (15), wherein the power take-off connection (30) is connected via a second drive belt (31) to the internal combustion engine (11).

2. Self-propelled forage harvester (1) according to claim 1, **characterized in that** the three-point linkage (17) is designed as a hydraulic three-point linkage and has at least one hydraulic lifting cylinder (28, 29), via which lower links (22, 23) joined at the link points can be raised and lowered.

3. Self-propelled forage harvester (1) according to claim 2, **characterized in that** the at least one hydraulic lifting cylinder (28, 29) can be controlled via a hydraulic system on the vehicle side.

4. Self-propelled forage harvester (1) according to one of claims 1 to 3, **characterized in that** the three-point linkage (17) has electrical and/or hydraulic connection points (33), to which supply lines of the implement (16) to be hooked in can be connected.

5. Self-propelled forage harvester (1) according to one of claims 1 to 4, **characterized in that** the three-point linkage (17) is secured to a bearing support (20) of a steerable rear axle (21).

6. Combination of
a self-propelled forage harvester (1) according to one of the preceding claims and an implement which can be hooked into the mounting device (15) of the harvesting machine (1).

7. Combination according to claim 6, **characterized in that** the implement is a harvested material processing device, in particular a baler.

8. Combination according to claim 6, **characterized in that** the implement is a water and/or silage additive container.

9. Combination according to claim 6, **characterized in that** the implement is a transport unit.

10. Combination according to claim 6, **characterized in that** the implement is a weight for the purpose of ballasting the harvesting machine (1).

11. Combination according to claim 6, **characterized in that** the implement is a crop residue processing device, in particular a mulcher (16).

## Revendications

1. Ensileuse automotrice (1) comprenant un châssis de véhicule (19) sur lequel un outil frontal peut être rapporté sur un côté avant (2) orienté dans la direction de travail et qui est muni d'un dispositif récepteur (15) sur un côté arrière (14) situé à l'opposé du côté avant (2), l'ensileuse comportant un moteur à combustion interne (11) qui, par l'intermédiaire d'un premier entraînement à courroie (12), entraîne un rotor de hachage (6) et une soufflante (9), **caractérisée en ce que** le dispositif récepteur (15) est conformé pour rapporter divers appareils de travail et son moyen de réglage en hauteur est conformé en relevage à trois points (17) qui dispose de points d'articulation (22a, 23a, 24a) pour un bras supérieur (24) et deux bras inférieurs respectivement levables et abaissables (22, 23) et auquel l'appareil de travail (16) peut être accroché, au dispositif récepteur (15) étant associé un accouplement d'arbre de prise de force (30) par l'intermédiaire duquel l'appareil de travail à accrocher (16) peut être entraîné, l'accouplement d'arbre de prise de force (30) étant en liaison avec le moteur à combustion interne (11) par l'intermédiaire d'un second entraînement à courroie (31) .

2. Ensileuse automotrice (1) selon la revendication 1, **caractérisée en ce que** le relevage à trois points (17) est conformé en relevage à trois points hydraulique et dispose d'au moins un vérin hydraulique (28, 29) par l'intermédiaire duquel des bras inférieurs (22, 23) assujettis aux points d'articulation sont levables et abaissables.

3. Ensileuse automotrice (1) selon la revendication 2, **caractérisée en ce que** le au moins un vérin hydraulique (28, 29) est commandable par l'intermédiaire d'un système hydraulique côté véhicule.

4. Ensileuse automotrice (1) selon une des revendications 1 à 3, **caractérisée en ce que** le relevage à trois points (17) comporte des points de raccordement électriques et/ou hydrauliques (33) auxquels des lignes d'alimentation de l'appareil de travail à accrocher (16) peuvent être raccordées.

5. Ensileuse automotrice (1) selon une des revendications 1 à 4, **caractérisée en ce que** le relevage à trois points (17) est fixé à une chape (20) d'un essieu arrière directeur (21).

6. Combinaison d'une ensileuse automotrice (1) selon une des revendications précédentes et d'un appareil de travail qui peut être accroché au dispositif récepteur (15) de la machine de récolte (1).

7. Combinaison selon la revendication 6, **caractérisée en ce que** l'appareil de travail est constitué par une appareil de traitement de produit récolté, en particulier par une presse à balles.

8. Combinaison selon la revendication 6, **caractérisée en ce que** l'appareil de travail est constitué par un réservoir d'eau et/ou d'additif d'ensilage

9. Combinaison selon la revendication 6, **caractérisée en ce que** l'appareil de travail est constitué par un équipement de transport.

10. Combinaison selon la revendication 6, **caractérisée en ce que** l'appareil de travail est constitué par un poids dans le but de ballaster la machine de récolte (1).

11. Combinaison selon la revendication 6, **caractérisée en ce que** l'appareil de travail est constitué par un appareil de traitement de plantes résiduelles, en particulier par un broyeur (16).
